# EUROPÄISCHE PATENTSCHRIFT

(11) **EP 3 852 308 B1**
(45) Veröffentlichungstag und Bekanntmachung des Hinweises auf die Patenterteilung: **28.08.2024**
(21) Anmeldenummer: 20152744.7
(22) Anmeldetag: 20.01.2020
(51) Int. Cl.: H04L 41/0806, H04L 41/08, H04L 41/085, H04L 41/0869

(54) **VERFAHREN ZUM PROVISIONIEREN VON TELEKOMMUNIKATIONSENDGERÄTEN**
METHOD FOR PROVISION OF TELECOMMUNICATION TERMINALS
PROCÉDÉ D'APPROVISIONNEMENT DE TERMINAUX DE TÉLÉCOMMUNICATION

(43) Veröffentlichungstag der Anmeldung: 21.07.2021
(73) Patentinhaber: NFON AG, 81379 München (DE)
(72) Erfinder: KOOPMANN, Jan-Peter, 81379 München (DE); BESKÖK, Deniz, 81379 München (DE)
(74) Vertreter: 2s-ip Schramm Schneider Bertagnoll Patent- und Rechtsanwälte Part mbB

(56) Entgegenhaltungen:
- EP-A1- 3 389 237
- DE-A1- 102007 012 749
- "Provisioning Bootstrap ; OMA-WAP-TS-ProvBoot-V1_1-20090728-A", no. 1.1, 28 July 2009 (2009-07-28), pages 1 - 22, XP064072292, Retrieved from the Internet <URL:ftp/Public_documents/DM/Permanent_documents/> [retrieved on 20090820]

## Beschreibung

Die Erfindung betrifft ein Verfahren zum Provisionieren von Telekommunikationsendgeräten (TK-Endgeräten).

Ein notwendiger Vorgang bei Cloud-basierten Telekommunikationsdiensten, z.B. Cloud-Telefondiensten (CPBX), ist, dass TK-Endgeräte (z.B. Telefone), die beim Kunden vor Ort stehen, mit einer Konfiguration versehen werden. Die Konfiguration in dem TK-Endgerät sorgt dafür, dass das TK-Endgerät z.B. "weiß",
1. bei welchen Servern es sich für Signalisierung (in erster Linie mittels des Protokolls SIP) anmelden muss
2. wie es sich bei diesen Servern authentifizieren muss (Username / Password);
3. wo es sich in Zukunft Konfigurationen abholen muss
4. welcher Displayname im TK-Endgerät stehen soll
5. welche Sprache (Deutsch, Englisch etc.) im Telefonmenü verwendet werden soll
6. wie es aufs Anlagentelefonbuch zugreifen kann
7. ob und wenn ja welche zusätzlichen Menüs für die Anlagen- bzw. Nebenstellenkonfiguration zur Verfügung stehen
8. welche Tasten am TK-Endgerät welche Funktion haben (z.B. Besetzlampenfelder)
9. die korrekte Uhrzeit/ das korrekte Datum/die Zeitzone.

Hierbei sollen die TK-Endgeräte beim Kunden in Betrieb genommen werden können, ohne dass sie manuell konfiguriert werden müssen (vom Kunden, einem Partner/Dienstleister oder gar dem Anbieter der Kommunikationslösung bzw. Dienstleistung selber). Dies wird in der Regel über sogenannte (Auto-)Provisionierung, bei der die Konfiguration aus der Ferne auf das TK-Endgerät übertragen wird, bzw. einer Weiterführung erreicht, die umgangssprachlich als "Zero-Touch-Provisioning" bezeichnet wird.

TK-Endgeräte verfügen über Netzwerkschnittstellen mit Ethernet oder WLAN als Transportmedium. In beiden Fällen hat jedes TK-Endgerät zur eindeutigen Identifizierung eine sogenannte MAC-Adresse. Diese soll eigentlich weltweit eindeutig sein. MAC-Adressbereiche werden unterschiedlichen Herstellern zugewiesen. Viele Netzwerkgeräte erlauben jedoch, dass die MAC-Adresse manipulativ verändert werden kann.

Grundlage von vielen (Auto-)Provisionierungssystemen ist es, dass der Kunde oder ein Dienstleister in der Konfiguration des Dienstes bzw. der Dienstleistung (also z.B. des Cloud-PBX Dienstes bzw. der Telefonanlage) die MAC-Adresse des TK-Endgeräts bzw. der Telefone hinterlegt, die mit diesem Dienst für diesen Kunden verwendet werden sollen. In einer praktischen Ausprägung bekommt der Kunde also beispielsweise 10 TK-Endgeräte geliefert (oder kauft diese wo auch immer), loggt sich als Kunde in einem Service-Portal ein, wählt "Endgerät hinzufügen", wählt den Hersteller und Typ des TK-Endgeräts aus und trägt die auf dem TK-Endgerät aufgedruckte/-klebte MAC-Adresse im Portal ein.

Wenn zu einem späteren Zeitpunkt das TK-Endgerät vom Kunden das erste Mal mit Netzwerk und Strom versorgt wird, hat das TK-Endgerät noch keine spezifische Konfiguration, sondern ist mit Werkseinstellungen konfiguriert. Die TK-Endgeräte versuchen jetzt Hersteller- und Firmware-abhängig über verschiedene Formen, sich eine Konfiguration zu besorgen. Dies geschieht in der Regel über DHCP-Optionen etc.

In den TK-Endgeräten ist eine URL eingespeichert, welche die TK-Endgeräte per http/https aufrufen und dabei ihre MAC-Adresse übertragen. Die dazugehörigen Server werden von den jeweiligen Herstellern betrieben und hier als "Redirection-Server" bezeichnet. Die Redirection-Server besitzen eine Datenbank, in der sie eine Zuordnung zwischen MAC-Adressen und Konfigurationen oder Provisioning-Servern haben.

Je nach Umsetzung beim Telefon-Hersteller kann ein Anbieter von Telekommunikationsdienstleistungen für MAC-Adressen also komplette Telefonkonfigurationen beim Hersteller hinterlegen oder auch nur den Verweis darauf, wo sich die TK-Endgeräte melden sollen, um eine endgültige Konfiguration zu erhalten.

In der Praxis kann dies wie folgt geschehen:
- Wenn ein Kunde/Partner im Service-Portal des TK-Dienstleisters ein TK-Endgerät mit MAC-Adresse hinzufügt bzw. bekannt macht, nimmt der TK-Dienstleister mit dem Redirection-Service des Herstellers Kontakt auf und hinterlegt dort die Information, dass sich das TK-Endgerät doch bitte bei dem TK-Dienstleister melden soll.
- Wenn ein TK-Endgerät mit Werkseinstellung das erste Mal mit dem Netz verbindet, wird es zwangsläufig den Redirection-Server seines Herstellers kontaktieren und dort die Information erhalten, sich für nachfolgende Anfragen beim Provisioning-Dienst des TK-Dienstleisters zu melden.
- Das TK-Endgerät startet daraufhin weitere Provisionierungsaufrufe bei dem TK-Dienstleister und wird von der Plattform des TK-Dienstleisters mit der korrekten Konfiguration versorgt.
- Auch nach Erhalt der (ersten) Konfiguration fragt das TK-Endgerät regelmäßig beim TK-Dienstleister nach (aktualisierten) Konfigurationen an. Diese Provisionierungen werden in ähnlicher Weise abgesichert wie bei der Erst-Provisionierung im Rahmen der Neueinrichtung des TK-Endgeräts, nämlich durch Überprüfung der MAC-Nummer und des SSL-Zertifikats des TK-Endgeräts.

Die TK-Endgeräte übertragen ihre MAC-Adresse bei Provisionierungsaufrufen typischerweise als Parameter in der http/https-Anfrage an den Provisionierungsserver und/oder als Bestandteil des User-Agent der http/https-Anfrage.

Es hat sich nun herausgestellt, dass die Überprüfung einer MAC-Adresse alleine keine ausreichende Sicherheit bietet. Denn die MAC-Adressen sind in Anfragen leicht zu fälschen und die MAC-Adressbereiche der Hersteller sind hinreichend bekannt. Ohne zusätzliche Sicherungsmaßnahmen wäre es einem Angreifer dabei möglich, sich als ein beliebiges TK-Endgerät auszugeben und die TK-Endgerätekonfiguration inkl. aller sicherheitsrelevanten Bestandteile ohne Berechtigung zu beschaffen. Um dieses Problem zu umgehen, verwenden moderne TK-Endgeräte nicht nur SSL-Zertifikate vom Hersteller als Verschlüsselungsmechanismus, sondern auch zur Authentifikation.

Die TK-Endgeräte besitzen hierbei SSL-Zertifikate, mit denen sie sich beim Provisionierungsserver melden. Der Provisionierungsserver kann mittels der vom Hersteller verfügbaren öffentlichen Teile der SSL-Zertifikate überprüfen, ob die Zertifikate korrekt/echt/valide sind. Dies ermöglicht es einem Provisionierungsserver zu überprüfen, ob ein Provisionierungs-Request auch wirklich von einem TK-Endgerät des Herstellers und nicht etwa von einem PC eines Angreifers kommt.

Wenn der Provisionierungsserver des TK-Dienstleisters also beispielsweise die Anfrage bekommt, die Konfiguration eines bestimmten TK-Endgeräts mit der MAC-Adresse ABC auszuliefern, kann zumindest überprüft werden, ob der Aufruf wirklich von einem derartigen TK-Endgerät kommt. Ist dies der Fall, vertraut man auch der MAC-Adresse, und falls die MAC-Adresse bekannt ist, wird die Konfiguration generiert und ausgeliefert.

Die oben beschriebene Vorgehensweise kann jedoch nur dann als hinreichend sicher betrachtet werden, solange man dem MAC-Adressen-Identifikationsprozess vertrauen kann. Aus dem Bereich Mobilfunk ist der "Provisioning Bootstrap"-Standard, ein Standard der Open Mobile Alliance (OMA), OMA-WAP-TS-ProvBoot-V1_1-20090728-A, bekannt. Der Prozess nach dem "Provisioning Bootstrap"-Standard dient der Provisionierung von zuvor unkonfigurierten Kontexten in einem mobilen Endgerät (ME) mittels des WAP-Protokolls. Dabei wird die initiale Provisionierung von einem entsprechenden Server gestartet, indem der Server dem ME eine Bootstrap-Datei über einen WAPPUSH übermittelt. Der Server authentifiziert dabei das ME lediglich auf Netzwerkebene implizit. Das ME hat jedoch den Server anhand eines generischen Sicherheitsmechanismus explizit zu authentifizieren. Aufgabe der vorliegenden Erfindung ist es demnach, die Sicherheit der Provisionierung eines TK-Endgeräts zu erhöhen.

Diese Aufgabe wird durch das Provisionierungsverfahren gemäß Anspruch 1 gelöst. Vorteilhafte Weiterbildungen der Erfindung sind in den abhängigen Ansprüchen definiert. Demgemäß durch die Erfindung bereitgestellt wird ein Computer-implementiertes Verfahren zum Provisionieren eines TK-Endgeräts über eine Cloud, wobei dem TK-Endgerät eine ID zugeordnet ist, die das TK-Endgerät identifiziert, und wobei das Provisionieren des TK-Endgeräts ein Bereitstellen einer Konfiguration für das TK-Endgerät über die Cloud zum Ziel hat, wobei die Konfiguration das TK-Endgerät zur Nutzung von vorbestimmten Cloud-basierten TK-Diensten befähigt.

Die Erfindung wird anhand von Ausführungsbeispielen und der Zeichnung näher beschrieben.

In der Zeichnung zeigen:
- **Fig. 1**: eine Gesamtübersicht über Dienste einer Telefonanlage in der Cloud (CPBX), in welcher das erfindungsgemäße Verfahren implementiert ist, und ein lokales TK-Endgerät,
- **Fig. 2**: Kommunikationsbeziehungen eines gemäß der Erfindung komplett authentifizierten (und eingerichteten) TK-Endgeräts (Status 4) und dessen Benutzer,
- **Fig. 3**: Kommunikationsbeziehungen eines gemäß der Erfindung nicht authentifizierten TK-Endgerätes und dessen Benutzer (Status 1-3),
- **Fig. 4 A-F**: den Ablauf der Provisionierung gemäß einem ersten Ausführungsbeispiel der Erfindung und
- **Fig. 5 A-F**: den Ablauf der Provisionierung gemäß einem zweiten Ausführungsbeispiel der Erfindung.

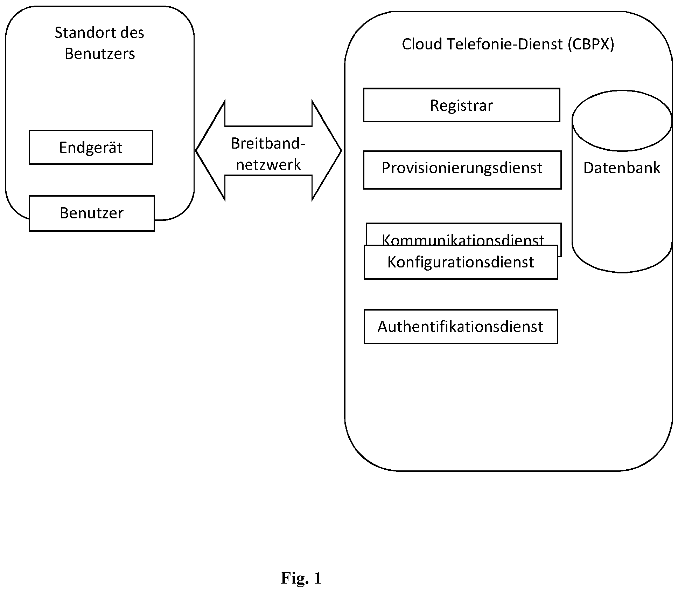

Fig. 1 zeigt eine Gesamtübersicht über Dienste einer Telefonanlage in der Cloud (CPBX), in welcher das erfindungsgemäße Verfahren implementiert ist, und ein lokales TK-Endgerät. Die hierbei relevanten Komponenten werden nachfolgend erläutert. Die Erfindung ist nicht auf eine Telefonanlage in der Cloud (CPBX) beschränkt sondern erstreckt sich auch auf weitere Cloud-basierte Kommunikationsdienste, auch wenn im Folgenden stellvertretend nur von einem CPBX-Dienst die Rede ist.

### Kommunikationsdienste

Die Kommunikationsdienste sind alle Bestandteile des Angebots, welche im normalen Produktivbetrieb das Serviceangebot zur Verfügung stellen. Bei einem Cloud-PBX-Dienst handelt es sich hierbei z.B. um
- Telefonanlagenserver,
- Konferenzserver,
- Faxserver,
- Voicemail-Dienste.

Diese Dienste werden erfindungsgemäß bei nicht authentifizierten TK-Endgeräten unterbunden.

### TK-Endgerät

Das TK-Endgerät wird vom Benutzer/Endanwender benutzt, um die Kommunikationsdienste des Dienstangebotes des CPBX-Dienstes zu nutzen. In einer praktischen Ausprägung ist dies z.B. ein Tischtelefon.

Diese TK-Endgeräte müssen konfiguriert werden, so dass sie eine Kommunikation zum Dienstleister bzw. zu den anderen Komponenten aufnehmen können. In einer praktischen Ausprägung umfasst die Konfiguration in der Regel mindestens die folgenden Provisionierungsattribute:
- Adresse und Typ Aufrufs des Provisionierungsdienstes (z.B.
   https://provisioning.nfon.com),
- SIP Registrar,
- SIP Username,
- SIP Passwort.

Optionale Provisionierungsattribute umfassen beispielsweise:
- Anzuzeigende Details wie Nebenstellennummer und Name,
- Zeitzone,
- Menüsprache,
- Zeitserver (NTP),
- Konfiguration der konfigurierbaren Tasten (z.B. als Besetzfeldlampen etc.),
- SIP/RTP Details wie zu nutzende Ports, Art der SIP Signalisierung, Verschlüsselungsparameter, zu verwendende Sprachcodecs, Audioparameter u.v.m.
- Zugriff auf erweiterte Bestandteile des Dienstes z.B. über http oder XML. Dies kann ein Anlagenmenü zur Konfiguration der Nebenstelle, eine Suchfunktion im Anlagentelefonbuch etc., sein.

TK-Endgeräte werden vom Hersteller mit einer minimalen bzw. größtenteils leeren Werkskonfiguration ausgeliefert und können in der Regel wieder in diesen Zustand zurückversetzt werden (Factory Default Reset).

TK-Endgeräte kommunizieren über vielfältige Wege mit den Diensten. Z.B.
- Provisionierungsdienst zur initialen Beschaffung einer Konfiguration aber auch für nachfolgende Beschaffungen von ggf. geänderten Konfigurationsläufen
- Eigentliche Dienstekommunikation (im Falle von Telefonen ist dies die Kommunikation mit der Telefonieplattform des Cloud-PBX-Dienstes, um Anrufe zu tätigen und zu erhalten).
- Weitere Dienste wie z.B. Zugriff auf sekundäre Dienste (z.B. Anlagenadressbücher, Ruflisten, Anlagenmenüs u.v.m.).

### Registrar

Dem zentralen Cloud-PBX-Dienst ist die genaue/derzeitige Adresse der TK-Endgeräte zunächst nicht bekannt. Da die TK-Endgeräte überall stehen können (auch hinter Internetverbindungen mit wechselnden IP-Adressen) und in der Regel hinter Firewall lokalisiert sind, ist es schlicht nicht möglich, dass der zentrale Cloud-PBX-Dienst von sich aus eine Erstkommunikation mit einem bereits konfigurierten Endgerät aufnimmt.

Daher sind die TK-Endgeräte so konfiguriert, dass sie von sich aus eine Erstkommunikation zu einer definierten/konfigurierten Gegenstelle suchen. Diese Gegenstelle wird Registrar genannt. Der Prozess der Kontaktaufnahme "Registrierung". Das Gerät meldet sich über ein definiertes Protokoll (z.B. SIP) beim konfigurierten Registrar (vergleiche die Abschnitte TK-Endgeräte, SIP-Registrar) und authentifiziert sich dort mittels den konfigurierten Credentials (z.B. bei Telefonie über den SIP Username und das SIP-Passwort).

Nach erfolgreicher Authentifikation versucht das TK-Endgerät, die Verbindung aufrecht zu erhalten. Die hierfür verwendeten Mechanismen hängen von den spezifischen Ausprägungen des Dienstes und der Konfiguration ab und sind für den hier beschriebenen Fall irrelevant.

Sobald die Verbindung besteht, können über den Registrar auch Kommandos an das TK-Endgerät geschickt werden (im Falle von SIP z.B. ein INVITE für einen Gesprächsaufbau aber auch Kommandos wie NOTIFY, um das Telefon zu einem Reboot oder zu einer erneuten Provisionierung zu bringen).

### Provisionierungsdienst

Die Aufgabe des Provisionierungsdienstes ist es, wie eingangs erläutert, die individuellen und jeweils aktuellen Konfigurationen für die Endgeräte zur Verfügung zu stellen und auszuliefern. Wie dies im Detail geschieht ist für hier nicht oder nur bedingt relevant. So können fertige Konfigurationen im Vorfeld erzeugt und abgelegt werden, die dann im Laufe eines Provisionierungsrequests nur noch an das Endgerät ausgeliefert werden. Alternativ kann die Konfiguration auch prozessual just-in-time erzeugt und ausgeliefert werden, ohne vorherige Zwischenspeicherung.

Der Provisionierungsdienst muss auf die Eigenheiten der jeweiligen Endgeräte eingehen. Die meisten Endgeräte verwenden proprietäre Konfigurationsformate, Authentifikationen etc. Einige Endgeräte unterstützen z.B. SSL-basierte Verschlüsselungen, andere verwenden proprietäre Verschlüsselungsmechanismen. Einige Endgeräte unterstützen Sprachverschlüsselung, andere nicht. Die Konfiguration jedes einzelnen Dienstemerkmals ist hochgradig Hersteller- und teilweise sogar Firmware-abhängig.

Der Provisionierungsdienst bezieht die für die Erzeugung der Konfigurationen notwendigen Daten typischerweise aus einer oder mehreren Datenbanken. Wenn im ausliefernden Provisionierungsdienst schon vorher erzeugte Konfigurationen abgelegt sind, gibt es auch einen Mechanismus, der diese Konfigurationen im Vorfeld erzeugt. Der Einfachheit halber und da es keinen Unterschied im Sinne des Patents macht, wird hier nicht unterschieden und der gesamte Prozess der Authentifikation, Generierung der Konfiguration und Auslieferung der Konfiguration als "Provisionierung" bezeichnet, die vom "Provisionierungsdienst" erbracht wird.

In der erfindungsgemäßen Implementierung werden Provisionierungsanfragen, die lediglich die MAC-Adresse oder eine andere gerätebezogene ID und ggf. ein SSL-Zertifikat beinhalten, als unsicher eingestuft. Erfindungsgemäß wird ein Telefon bzw. TK-Endgerät durch die Provisionierungsplattform in einen der folgenden sechs Zustände (Status) kategorisiert:
1. Komplett unbekannt. Das TK-Endgerät ist zwar mit der MAC-Adresse oder einer anderen gerätebezogenen ID in der Datenbank der Provisionierungsplattform angelegt, ist aber noch nicht darüber hinaus authentifiziert.
2. Wie (1), jedoch ist das TK-Endgerät administrativ auf "Anlernen" geschaltet (zur Erklärung siehe unten).
3. Das TK-Endgerät ist von einem Benutzer mittels erfindungsgemäß zusätzlicher Authentifikation korrekt authentifiziert worden, hat jedoch noch nicht seine endgültige Konfiguration erhalten bzw. angefordert.
4. Das TK-Endgerät ist vollständig authentifiziert und bereits mit einer vollständigen Konfiguration versorgt worden. Nur in diesem Status ist das TK-Endgerät durch den Benutzer auch mit den Kommunikationsdiensten vollständig nutzbar.
5. Das TK-Endgerät ist temporär gesperrt und kann durch administrativen Eingriff, z.B. über ein Portal, wieder in einen der Zustände 1-3 zurückgesetzt oder aber durch ein IP-Whitelisting direkt in den Zustand 4 gebracht werden. Optional kann ein TK-Endgerät auch nach dem Ablauf eines konfigurierbaren Intervalls automatisch in den Status 1 zurückversetzt werden. In diesem Fall ist es je nach Implementierung auch legitim, dass keine neue PIN generiert wird.
6. Das TK-Endgerät ist gesperrt und kann ausschließlich durch administrativen Eingriff z.B. über ein Portal wieder in einen der Zustände 1-3 gebracht werden.

Der jeweils zutreffende Zustand wird dem TK-Endgerät zugeordnet und in der Datenbank der Provisionierungsplattform (also des Provisionierungsdienstes) zusammen mit der ID des jeweiligen TK-Endgeräts gespeichert und gepflegt.

Wenn ein TK-Endgerät mit Werkseinstellungen nach einer Konfiguration sucht, wird es sich wie weiter oben beschrieben zunächst an den Redirection-Server des Herstellers wenden und dort wie bisher an den Provisionierungsdienst des Cloud-PBX-Dienstes verwiesen.

Hier stellt es im zweiten Schritt wie weiter oben beschrieben eine Provisionierungsanfrage, bei der jedoch nur die MAC-Adresse oder andere gerätebezogene ID übermittelt wird. Der Provisionierungsdienst überprüft, ob sich das TK-Endgerät mit dieser MAC-Adresse in der Datenbank befindet. Wenn nein, wird die Anfrage ignoriert bzw. aktiv beendet. Andernfalls erkennt der Provisionierungsdienst, dass sich das TK-Endgerät in Status 1 befindet.

Wenn erkannt wird, dass sich das TK-Endgerät in Status (1) befindet, wird es mit einer Minimalkonfiguration versorgt. Diese Konfiguration erlaubt es lediglich, nachfolgende Authentifikationsschritte durchzuführen, jedoch werden keine datenschutzrechtlich oder kommerziell bedenklichen Konfigurationen vorgenommen oder Aktionen erlaubt. So beinhaltet die Konfiguration explizit
- keine Namen oder Nebenstelleninformationen,
- keinen Zugriff auf Adressbücher,
- keine SIP Credentials, mit denen z.B. in einem CPBX-Dienst echte Telefongespräche mit dem TK-Endgerät möglich sind (weder ein- noch ausgehend).

Die Einschränkung der Dienste, die das Endgerät nutzen kann, erfolgt nicht auf dem TK-Endgerät. Vielmehr wird in den eigentlichen zentralen Diensten (Provisionierungsdienst, Registrar, Cloud--Kommunikationsdienste) dafür gesorgt, dass das Endgerät in diesen Diensten keine Aktionen ausführen kann.

Eine erfindungsgemäß mögliche Authentifikationsmaßnahme ist z.B. die Eingabe einer PIN. Diese kann z.B. durch am TK-Endgerät verfügbare Menüinteraktionen (z.B. XML-Menü) oder mittels SIP/RTP vorgenommen werden. Vorgesehen ist z.B., dass bei Abheben des Telefonhörers automatisch eine Sprachverbindung zu einem Authentifikationsdienst aufgebaut wird und der Benutzer per Sprachansage dazu aufgefordert wird, eine PIN einzugeben.

Die PIN wird dem validen Benutzer über andere Portale (z.B. dem Serviceportal des Cloud-PBX-Dienstes) oder Kommunikationswege (wie z.B. SMS, E-Mail, Brief) zugänglich gemacht. Ohne passende Zugangsdaten zu den Admin- oder Kundenportalen bzw. Zugang zu den alternativen Kommunikationswegen ist es nicht möglich, die PIN zu besitzen. Insbesondere reicht eine Anfrage an Provisionierungsdienste und das Vortäuschen von MAC-Adressen und SSL-Zertifikaten nicht aus. Die PINs werden beim Anlegen des TK-Endgeräts in der Datenbank bzw. immer, wenn ein TK-Endgerät in den Status (1) versetzt wird, zufällig erzeugt und gelten pro individuellem TK-Endgerät oder wenn technisch nicht anders möglich pro Benutzer/Kunde. Es ist für die Erfindung unerheblich, wie die zusätzlichen Authentifikationsmerkmale (z.B. PIN) beim Anbieter bzw. in der Datenbank hinterlegt werden (sprich z.B. ob im Klartext, verschlüsselt oder gehashed).

Ist der Benutzer, der die Authentifikation des TK-Endgeräts vornehmen möchte, im Besitz der PIN oder alternativen zusätzlichen Credentials, werden diese über einen der unterstützten Mechanismen eingegeben. Die Provisionierungsplattform vergleicht die übermittelten Credentials mit den in der Datenbank hinterlegten. Stimmen die Credentials nicht überein, verbleibt das TK-Endgerät in der Datenbank im Status (1). Nach mehreren Fehleingaben kann das TK-Endgerät auch in den Status (5) oder bei wiederholten Fehleingaben in den Status (6) versetzt und die bisherige Minimalkonfiguration invalidiert werden (z.B. werden die temporären SIP Credentials serverseitig deaktiviert).

Wenn die Credentials jedoch stimmen, wird:
1. TK-Endgerät in der Datenbank in den Status (3) versetzt; dies kann mit einer knappen zeitlichen Limitierung versehen werden;
2. TK-Endgerät über die üblichen Methoden (z.B. SIP NOTIFY) und den bisher etablierten Kommunikationskanal aufgefordert, eine neue Provisionierung anzufordern. Alternativ wird der Benutzer aufgefordert, das Endgerät neu zu starten.

Alternativ kann ein Endgerät auch temporär in den Status "manuelle Freigabe" (Status 2) versetzt werden. Dies ist nur über ein den Konfigurationsdienst möglich, an dem sich ein Benutzer mittels separater Anmeldedaten authentifizieren muss.

Wenn das TK-Endgerät auf die in (Schritt 2) übermittelte Anforderung zur neuen Provisionierung reagiert, wird es eine neue Provisionierung starten, die sich noch nicht von der vorherigen unterscheidet. Findet diese zeitnah und innerhalb der vorgegebenen Grenzen statt, wird in der nachfolgenden Provisionierung eine endgültige Konfiguration für das TK-Endgerät generiert und ausgeliefert (siehe nächster Absatz). Hierbei kann optional auch die Verifikation der IP-Adresse stattfinden, von der die Provisionierungsanfrage kommt, denn diese sollte sich zwischen der Autorisation per PIN etc. und der nächsten Provisionierungsanfrage nicht ändern.

Immer wenn sich ein TK-Endgerät bei der Provisionierungsplattform meldet und nur seinen Identifier (z.B. MAC-Adresse) übermittelt, wird von der Provisionierungsplattform überprüft, in welchem Status sich das Gerät laut Datenbank befindet. Ist der Status (1) werden die oben beschriebenen Schritte ausgeführt.

Befindet sich das TK-Endgerät jedoch in Status 2 oder drei, wird in der Provisionierungsplattform im Zuge der Generierung der vollständigen Konfiguration ein weiteres Authentifikationsmerkmal (a) generiert (z.B. ein HASH, der aus mehreren Kriterien wie der MAC-Adresse, Datum/Uhrzeit und einem zufälligen Wert gebildet wird), in der Datenbank hinterlegt und mittels der vollständigen Konfiguration an das Endgerät übermittelt.

Die endgültige Konfiguration enthält daher nicht nur alle sicherheitsrelevanten Optionen (wie z.B. SIP Username und Passwort, korrekte Aufrufe für Adressbuchsuchen, Nebenstellennummern und -namen, Besetzfeldlampen) für den kompletten produktiven Betrieb inkl. aller Dienstemerkmale sondern auch einen neuen Aufruf für die Provisionierungsplattform. Dieser Aufruf beinhaltet die in Schritt (a) generierten zusätzlichen Merkmale. Sobald diese Konfiguration ausgeliefert wurde, wird das TK-Endgerät in den Status (4) versetzt. Erst jetzt wird die Telefonanlage Kommunikationsversuche von einem Telefon mit diesen SIP-Credentials in die CPBX erlauben und Gespräche zustellen (inbound/outbound) bzw. sicherheitsrelevante Anfragen (wie z.B. Adressbuchsuchen oder serverseitige Ruflisten) bearbeiten und beantworten.

Dieses Verfahren verringert die Gefahr möglicher Angriffe aufgrund fehlender technischer Authentifikation oder z.B. einer schwachen oder kompromittierten technischen Authentifikation (z.B. aufgrund von kompromittierten Client SSL-Zertifikaten auf dem Endgerät) etc. enorm oder schließt diese gar vollständig aus. Es ermöglicht so die sichere Inbetriebnahme von Endgeräten, die sich nur über einen Identifier bei einem Provisionierungsdienst melden bzw. wo man weiteren technischen Maßnahmen wie z.B. Client SSL Zertifikaten nicht vertraut.

Als Kontrollüberlegung wird betrachtet, wie sich das System in den verschiedenen Stati verhält, wenn ein potentieller Angreifer das Provisionierungssystem kontaktiert (z.B. von einem PC aus, mit dem der Angreifer in der Lage ist, sich dem Provisionierungssystem gegenüber erfolgreich als Telefon auszugeben).

Wird erkannt, dass sich das Telefon in Status 1 befindet, bekommt das Telefon nur eine temporäre, "ungefährliche" Zwischenkonfiguration. Mit dieser ist es nicht möglich, auf Produktivdaten zuzugreifen oder Telefongespräche zu führen oder zu empfangen, wie weiter oben beschrieben. Auch weitere Versuche wie Dictionary Attacks etc. werden verhindert, weil dem Telefon keinerlei weiteren Aktionen erlaubt werden, als die Authentifikationsplattform zu kontaktieren, bei der nur begrenzt oft das Authentifikationsmerkmal eingegeben werden kann. Ohne die Kenntnis der gerade validen PIN für dieses Telefon kann das Telefon nicht mit anderen Konfigurationsdaten versorgt werden.

Wird erkannt, dass sich das Telefon in Status 3 befindet, kann wie oben beschrieben optional seitens des Provisionierungssystems darauf bestanden werden, dass die IP-Adresse während der PIN-Eingabe und zum Zeitpunkt des jetzt in Abarbeitung befindlichen Provisionierungsrequest gleich ist. Da es sich um TCP-basierte Anfragen handelt, kann die Anfrage aus Sicht des Cloud-PBX-Dienstanbieters nur aus demselben Netzwerk kommen, von dem auch die Authentifikation erfolgte. Auch wenn die IP-Adressen-Überprüfung übersprungen wird, ist ein Angriff bei einem kurzen Gültigkeitsintervall sehr unwahrscheinlich.

Wird erkannt, dass sich das Telefon in Status 4 befindet, lehnt das Provisionierungssystem die Anfrage ab, denn das Provisionierungssystem muss davon ausgehen, dass ein Telefon über das zusätzliche Credential (a) verfügt. Da dieses der Anfrage nicht mitgeliefert wird, muss es sich bei der Anfrage um einen Angriff handeln.

Wird erkannt, dass sich das Telefon in Status 5 oder 6 befindet, lehnt das Provisionierungssystem werden ebenfalls ab.

Das Merkmal (a) kann für die Dauer der Zeit, in dem ein Telefon in Status 4 ist, konstant bleiben. Vorzugsweise wird jedoch das Merkmal (a) zwischendurch neu generiert. In einer weiter vorzugsweisen Implementierung wird das Merkmal immer dann neu generiert, wenn ein Telefon im Status 4 erfolgreich (inkl. bisher validem Merkmal (a)) den Provisionierungsdienst kontaktiert.

Die erfindungsgemäßen Mechanismen können mit anderen Sicherheitsmaßnahmen der Telefonhersteller kombiniert werden, sind jedoch auch unabhängig davon wirksam.

Zusätzlich zu den obigen Ausführungen können zusätzliche Mechanismen umgesetzt werden, um das Benutzererlebnis zu steigern:

### Modus Anlernen

Ein Administrator mit Zugriff auf die Konfiguration der Anlage (z.B. das Serviceportal) kann ein TK-Endgerät auswählen und manuell in den Modus/Status Anlernen (2) versetzen. Dies sorgt dafür, dass die nächste Anfrage eines TK-Endgeräts mit der hinterlegten MAC-Adresse und ohne Authentifikationsmerkmal (a) als valide angenommen wird. Das TK-Endgerät wird dann analog zu den oben beschriebenen Mechanismen mit einer kompletten Konfiguration versorgt (es wird also ein Merkmal (a) generiert etc.). Zwischen Status (2) und Status (3) besteht kein nennenswerter Unterschied außer, dass Status (2) nur manuell herbeigeführt werden kann und die hinterlegten Timeouts anders sein können als bei (3).

### Beispiel:

Wenn ein Administrator für ein TK-Endgerät manuell den Status (2) herbeiführt, kann es wünschenswert sein, Anfragen für eine definierte Zeit zuzulassen (z.B. 30 Minuten). In der Regel wird sich ein Administrator mit dem Benutzer in Verbindung setzen und sich vergewissern, dass das TK-Endgerät jetzt voll funktionstüchtig ist.

Wenn ein TK-Endgerät über PIN-Authentifikation von Status (1) in Status (3) wandert, darf das System davon ausgehen, dass das TK-Endgerät innerhalb der nächsten Sekunden eine Provisionierung anfragt. Der Timeout kann daher nur wenige Minuten lang sein, um den Angriffsvektor zu verkleinern.

### Manuelles Whitelisting von IP-Adressräumen

Gerade KundenBenutzer mit statischen und bekannten IP-Adressen können davon profitieren, dass der Administrator des Dienstes die IP-Adresse bzw. einen IP-Adressraum vorgibt, von dem aus alle Provisionierungs-Requests erlaubt werden. Da es sich bei den Provisionierungs-Requests um TCP-Verbindungen handelt, ist hier ein Missbrauch sehr unwahrscheinlich.

Das Provisionierungssystem kann bei eingehenden Anfragen von TK-Endgeräten ohne zusätzliches Credential (a) überprüfen, ob die Anfrage von einer whitelisted IP-Adresse kommt, und falls ja, diese Anfrage sauber beantworten und das TK-Endgerät in Status 4 versetzen (inkl. Credential (a) etc.).

Die Whitelist-Adressräume werden individuellen Kunden des Dienstes zugeordnet, so dass nur TK-Endgeräte hiervon berücksichtigt werden, die zum einen laut Datenbank zu diesem Kunden bzw. dieser Dienstinstanz gehören und deren Anfragen von einer der besagten IP-Adressen kommt.

### Automatisches Whitelisting von IP-Adressen

Wenn diese Option implementiert und eingeschaltet ist, merkt sich das Provisionierungssystem, von welchen IP-Adressen sich TK-Endgeräte im Status (4) erfolgreich beim Provisionierungssytem gemeldet haben. Hierbei werden die IP-Adressen mit einem Timestamp versehen und dem jeweiligen Kunden bzw. der jeweiligen Kundeninstanz des Dienstes verknüpft.

Im Grunde sorgt der Automatismus nur dafür, dass IP-Adressen, von denen sich ein TK-Endgerät im Status (4) erfolgreich eine Provisionierung angefordert hat, temporär (mit einem Ablaufdatum) gewhitelisted werden (siehe vorhergehenden Abschnitt).

Um den Angriffsvektor zu verkleinern, ist dabei darauf zu achten, dass die IP-Adressen mit einem möglichst kurzen Zeitraum ins Whitelisting übernommen werden. Hierfür kommen wenige Minuten oder Stunden in Betracht.

### Weitere Anmerkungen

Zu beachten ist der Sonderfall, wenn ein TK-Endgerät zurück auf Werkseinstellungen gesetzt wird. Dies kann z.B. bei Fehlkonfigurationen seitens des Benutzers oder während der Entstörung möglich sein. Wenn sich ein TK-Endgerät noch im Status (1) - (3) befindet oder die Anfrage aufgrund der Vereinfachungsregeln/Whitelisting zugeordnet werden kann, ist in der Regel keine Sonderbehandlung notwendig.

Wenn jedoch ein voll funktionstüchtiges TK-Endgerät (Status (4)) plötzlich eine Werkskonfiguration bekommt und nicht aufgrund der Vereinfachungsregeln/Whitelisting zugeordnet werden kann, muss das Provisionierungssystem von einem Angriff ausgehen und wird das TK-Endgerät mit überhaupt keiner Konfiguration versorgen (weder Minimalkonfiguration noch komplette Konfiguration). Damit der Benutze/Kunde das TK-Endgerät wieder in Betrieb nehmen kann, wird ihm die Möglichkeit gegeben, im separaten Administrationsportal das TK-Endgerät in den Status (1) oder (2) zurückzusetzen. Wann immer das TK-Endgerät neu bzw. erneut in den Status (1) kommt, wird eine neue individuelle PIN (oder allgemein ein neues Authentifikationsmerkmal) erzeugt werden.

Wird erkannt, dass sich das TK-Endgerät in Status (6) befindet, beantwortet das Provisionierungssystem keinerlei Provisionierungsanfragen, selbst wenn ein TK-Endgerät ein vermeintlich korrektes Credential (a) sendet. Dieses Verhalten kann auch bei einem TK-Endgerät im Status (5) implementiert werden. Wahlweise kann im Status (5) auch weiterhin die Minimalkonfiguration ausgeliefert werden (nicht jedoch eine endgültige/vollständige Konfiguration).

Wenn ein TK-Endgerät im Status (1) die Authentifikationsmechanismen kontaktiert und zu häufig (d.h. mehr als eine vorbestimmte Anzahl von Malen) das Authentifikationsmerkmal (PIN) falsch eingegeben wurde, wird das TK-Endgerät je nach Implementierung in den Status (5) oder Status (6) überführt.

Administratoren/Kunden können ein TK-Endgerät mittels Administrationsportal aus den Status (5) und Status (6) in den Status (1) oder (2) überführen.

Die Implementierung kann auch vorsehen, dass ein TK-Endgerät nach wiederholtem Wechsel in den Status (5) systemseitig in den Status (6) befördert wird. Dies ist dann interessant, wenn auf der einen Seite fehlerhafte Eingaben zügig den Status (5) herbeiführen sollen, man den Benutzern aber nach zeitlichen Sperrungen weitere Versuche erlauben möchte. In diesem Fall wird ein Endgerät aus dem Status (5) nach einer konfigurierbaren Zeit automatisch in den Status (1) überführt und erst bei wiederholter Fehleingabe in den Status (6).

### Authentifikationsdienst

Dieser Dienst bzw. Baustein kommt erfindungsgemäß neu hinzu. Wenn das TK-Endgerät eine Erstkonfiguration zu dem Zweck einer Authentifikation bekommen hat, muss dem TK-Endgerät eine technische Möglichkeit vermittelt werden, um mit dem Authentifikationsdienst Kontakt aufzunehmen. Dies ist die Minimal- bzw. vorläufige Konfiguration. Die Ausprägung des Kommunikationsdienstes und der genaue Kommunikationsweg hängen von der gewählten Authentifikationsmethode ab.

Der Authentifikationsdienst stellt zum einen die eigentlichen Authentifikationsmechanismen und Protokolle zur Verfügung und führt auch die Validierung der eingegeben Authentifikation durch. Zu diesem Zweck kommuniziert er mit der Datenbank, in die notwendigen Informationen hinterlegt sind.

Wenn die Authentifikation korrekt verläuft, kommuniziert der Authentifikationsdienst mit der Datenbank und hinterlegt die Information, dass das Endgerät die Authentifikation korrekt durchgeführt hat. Außerdem kann es mit anderen Diensten kommunizieren (z.B. dem Registrar und/oder dem Provisionierungsdienst), um nachfolgende Aktionen auszulösen.

Der Authentifikationsdienst kann komplett separat zu anderen Diensten sein (z.B. zum Registrar oder der Kommunikationsdienste) oder aber auch in der jeweiligen technischen Ausprägung Teil der anderen Dienste sein oder diese mitverwenden.

### Beispiel: Authentifikation via SIP/RTP/DTMF und einem PIN-Code.

In diesem Fall wird seitens des TK-Endgeräts zunächst eine Registrierung zu einem Registrar aufgebaut. Dies kann der normale Registrar sein, der später auch im normalen Produktivbetrieb verwendet wird. Es kann auch ein separater Registrar sein, der nur zum Zeitpunkt dieser Authentifikationsphase relevant ist. Dieser Registrar kann auch Teil des Authentifikationsdienstes sein.

Z.B. baut das TK-Endgerät durch das Abnehmen des Telefonhörers dann eine SIP/RTP-Verbindung zum Authentifikationsdienst auf. Die Signalisierung geschieht hierbei über SIP und durch den Registrar. Die Medienströme können direkt zum Authentifikationsdienst laufen, sie können aber auch durch weitere Sicherheitsmechanismen wie z.B. Firewalls oder Session Boarder Controller laufen.

Der Authentifikationsdienst nimmt die Verbindung entgegen und kann beispielsweise über den Audio-Rückkanal eine Ansage abspielen, die den Benutzer zur Eingabe einer PIN auffordert. Der Benutzer tippt daraufhin die PIN auf dem Endgerät ein, welches die PIN (z.B. über DTMF als Inband Audio oder andere übliche Mechanismen) an den Authentifikationsdienst überträgt. Der Authentifikationsdienst validiert die PIN und handelt abhängig vom Ergebnis.

Ist die Authentifikation erfolgreich, wird dies (mit Zusatzinformationen wie der genauen Uhrzeit und der IP-Adresse, von der aus die Verbindung aufgebaut wurde) in der Datenbank vermerkt. Außerdem wird der Registrar aufgefordert, dem entsprechenden TK-Endgerät das Kommando zu übermitteln, sich eine neue Konfiguration zu holen und/oder neu zu starten.

Ist die Authentifikation nicht erfolgreich, wird dies ebenfalls in der Datenbank vermerkt und ggf. abhängig von der Anzahl der Fehlversuche der Status des TK-Endgeräts verändert (z.B. auf (5) gesperrt).

### Beispiel: Authentifikation via XML-Menü und einem PIN Code.

Dieses Szenario entspricht weitestgehend dem Szenario im vorherigen Kapitel. Der Unterschied besteht darin, dass die Authentifikation nicht mittels SIP/RTP/DTMF erfolgt. Das Endgerät muss nicht mal eine SIP Registrierung besitzen. Vielmehr wird das TK-Endgerät mit einer minimalen Konfiguration versorgt, so dass der Zugriff auf ein http/XML (o.ä.) gesteuertes Menü möglich ist.

Wenn der Benutzer des Endgerätes also das Menü öffnet, nimmt das TK-Endgerät z.B. per https/xml Kontakt zum Authentifikationsdienst auf, der entsprechende Instruktionen übermittelt (z.B. "Bitte geben Sie die PIN ein"). Die dann im Endgerät eingegebenen Credentials werden wiederum per http/xml an den Authentifikationsserver übermittelt, der diese dann authentifiziert.

### Konfigurationsdienst

Über den Konfigurationsdienst kann der Endkunde bzw. der/ein Administrator den Gesamtdienst konfigurieren. Bei einer Cloud-PBX-Telefonanlage handelt es sich hier z.B. um ein Service-Portal, über das Administratoren TK-Endgeräte hinzufügen können, Nebenstellen konfigurieren und Rufnummern mit Diensten verknüpfen etc.

Der Konfigurationsdienst ist insofern bedeutsam, als dass sich ein Benutzer hier separat und sicher authentifizieren muss und dann unter anderem
- Endgeräte anlegen/löschen kann und
- den Status der Endgeräte verändern kann (z.B. Anlernen (2) oder Entsperren) und
- das derzeit gültige Authentifikationsmerkmal, z.B. die PIN, lesen kann. Dieses Merkmal, z.B. die PIN, wird dann bei der Authentifikation des Endgerätes während der Erstinbetriebnahme benötigt.

Der Konfigurationsdienst liest und schreibt seine Daten in die Datenbank.

### Datenbank

Für die weiteren Betrachtungen ist es gleichgültig, ob es sich um eine große Datenbank oder viele kleine Datenbanken handelt. Relevant ist, dass die beteiligten Dienste (z.B. Provisionierungsdienst für die Authentifikation, Authentifikationsdienst für die Verifikation der PIN, Konfigurationsdienst für die Anzeige und Bearbeitung der im zentralen Dienst hinterlegten Konfiguration) mit der oder den Datenbanken kommunizieren und die notwendigen Informationen persistieren und auf Abruf den verschiedenen Teildiensten die notwendigen Informationen zur Verfügung stellt.

Hier wird stets vereinfacht von "der Datenbank" gesprochen unabhängig davon, ob es sich in der technischen Ausprägung um eine oder mehrere Datenbanken handelt.

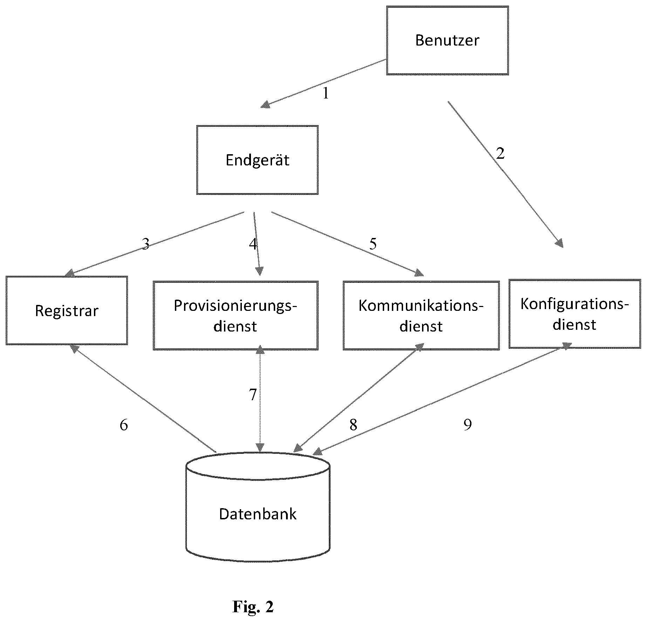

Fig. 2 illustriert erlaubte und mögliche Kommunikationsbeziehungen eines gemäß der Erfindung komplett authentifizierten (und eingerichteten) TK-Endgeräts (Status 4) und dessen Benutzer.
1) Der Benutzer verwendet das Endgerät
2) Der Benutzer verwendet den Konfigurationsdienst.
3) Das Endgerät verbindet sich mit dem Registrar hält die Verbindung aufrecht.
4) Das Endgerät kommuniziert mit dem Provisionierungsdienst, um Konfigurationen zu bekommen.
5) Das Endgerät kommuniziert mit den Kommunikationsdiensten (z.B. um zu Telefonieren). Die Kommunikation zwischen Endgerät und Kommunikationsdienst verläuft typischerweise auch teilweise durch den Registrar.
6) Der Registrar bezieht notwendige Authentikationsinformationen aus der Datenbank.
7) Der Provisionierungsdienst besorgt sich alle Teile zur Generierung der endgerätespezifischen Konfiguration aus der Datenbank.
8) Die Kommunikationsdienste beziehen viele Information aus der Datenbank, um die konfigurierten Dienste anbieten zu können (z.B. muss ein Kommunikationsdienst bei einem eingehenden Anruf auf die Nummer 123 wissen, zu welchem Kunden das anrufende Endgerät gehört, muss dann wissen, was sich hinter der Nummer 123 verbirgt, passende Routingentscheidungen treffen und dann die passenden Endgeräte klingeln lassen).
9) Der Konfigurationsdienst liest und schreibt die Konfiguration der Kunden in die Datenbank.

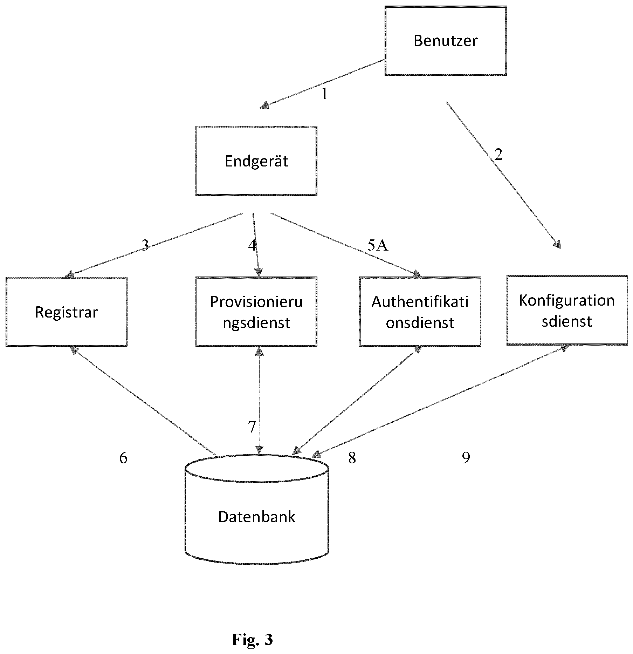

Fig. 3 illustriert Kommunikationsbeziehungen eines gemäß der Erfindung nicht authentifizierten TK-Endgerätes und dessen Benutzer (Status 1-3).-

Der Hauptunterschied zum Fall der Fig. 2 ist, dass die TK-Endgeräte nicht mit den eigentlichen Kommunikationsdiensten des Cloud-PBX-Dienstes kommunizieren dürfen (bzw. dort ohne Berechtigung bleiben, Aktionen, z.B. Telefonate, auszulösen), dafür jedoch mit dem Authentifikationsdienst kommunizieren können, siehe Pfad 5A in Fig. 3. Pfad 5 zum Cloud-PBX-Dienst gemäß Fig. 2 existiert nicht. Die übrigen Kommunikationsbeziehungen entsprechen denjenigen in Fig. 2.

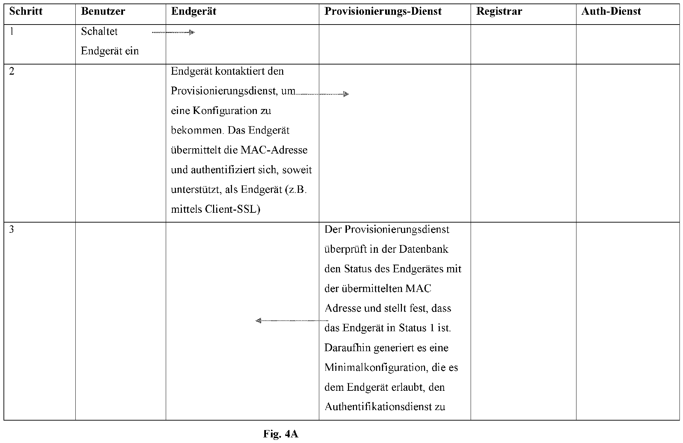

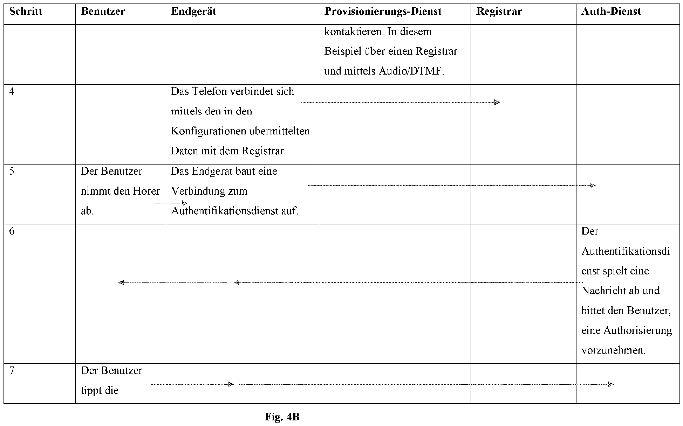

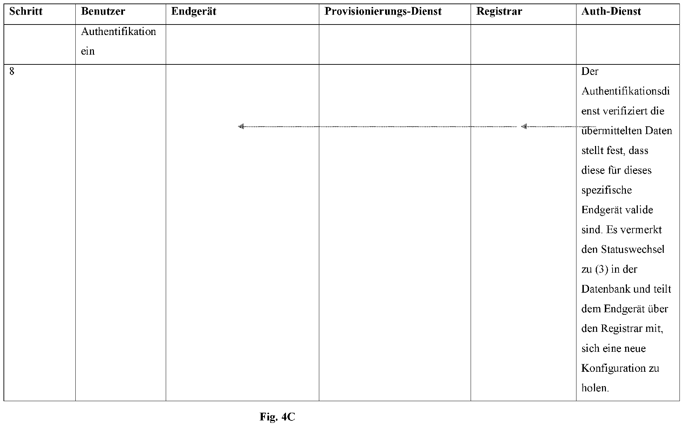

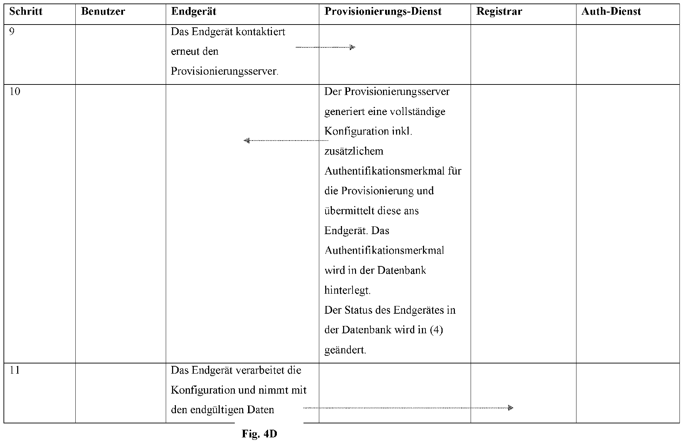

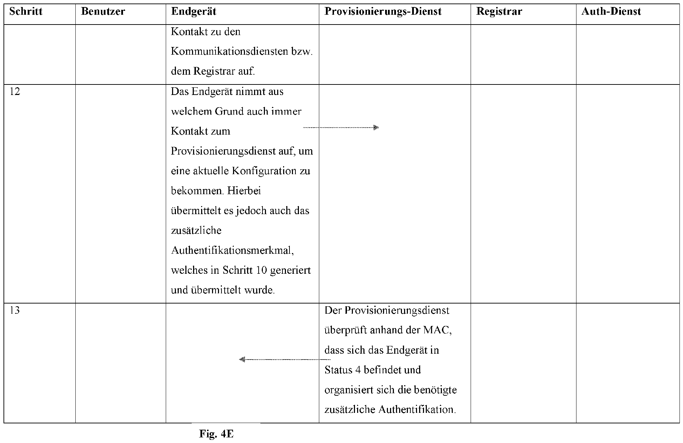

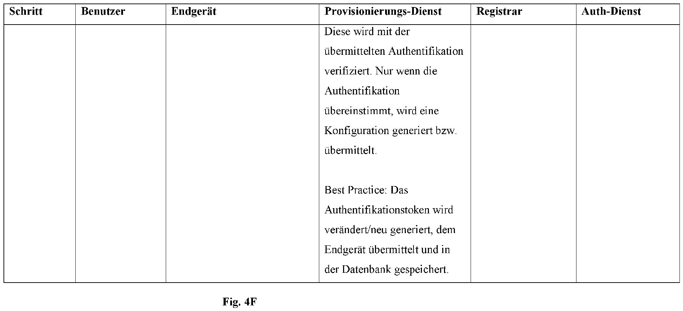

Fig. 4 A-F illustriert den Ablauf der erfindungsgemäßen Authentifizierung. Das Szenario geht von einem TK-Endgerät ohne wesentliche Konfiguration aus bzw. vom Werkszustand. In der Ablaufbeschreibung wird ignoriert, wie das Endgerät in die Lage versetzt wird zu wissen, welchen Provisionierungsserver es in Schritt 2 kontaktieren muss. Dies kann aufgrund manueller Konfiguration passieren, mittels DHCP-Parameter oder mittels Mechanismen wie den oben beschriebenen Redirection-Servern. Allen Methoden gemein ist, dass das Endgerät ab einem Zustand X (hier Schritt 1) "weiß", wie es den Provisionierungsdienst erreichen kann.

Schritt 1: Der Benutzer schaltet Endgerät ein.

Schritt 2: Das Endgerät kontaktiert den Provisionierungsdienst, um eine Konfiguration zu bekommen. Das Endgerät übermittelt die MAC-Adresse und authentifiziert sich, soweit unterstützt, als Endgerät (z.B. mittels Client-SSL). Der Provisionierungsdienst empfängt also eine Provisionierungsanfrage des TK-Endgeräts, welche dessen MAC-Adresse (und z.B. weitere Merkmale wie ein SSL-Zertifikat) enthält.

Der Provisionierungsdienst überprüft in Schritt 3 in der Datenbank den Status des Endgerätes mit der übermittelten MAC-Adresse und verifiziert, dass das Endgerät in Status 1 ist. Daraufhin generiert der Provisionierungsdienst eine Minimalkonfiguration, die es dem Endgerät erlaubt, den Authentifikationsdienst zu kontaktieren. In diesem Beispiel erfolgt dies über einen Registrar und mittels Audio/DTMF. Der Provisionierungsdienst übermittelt diese Minimalkonfiguration an das TK-Endgerät.

In Schritt 4 verbindet sich das TK-Endgerät mittels den in der übermittelten Minimalkonfiguration übermittelten Daten mit dem Registrar. Hiermit wird das TK-Endgerät in die Lage versetzt, mit dem Authentifikationsdienst zu kommunizieren.

Wenn der Benutzer das TK-Endgerät betätigt (z.B. den Hörer abnimmt), baut das Endgerät eine Verbindung zum Authentifikationsdienst auf, Schritt 5. Alternativ muss der Benutzer eine vordefinierte Rufnummer wählen, um mit dem Authentifikationsdienst verbunden zu werden.

Der Authentifikationsdienst spielt daraufhin in Schritt 6 eine Nachricht ab und bittet den Benutzer, eine Autorisierung vorzunehmen.

Der Benutzer nimmt die Authentifikation durch Eingabe einer PIN in sein TK-Endgerät vor, das TK-Endgerät überträgt die Daten, im Bespiel mittels DTMF, an den Authentifikationsdienst, Schritt 7.

In Schritt 8 verifiziert der Authentifikationsdienst die empfangenen Daten stellt fest, dass diese für dieses spezifische Endgerät valide sind. Es vermerkt den Statuswechsel zu (3) in der Datenbank und teilt dem TK-Endgerät über den Registrar mit, sich eine vollständige Konfiguration zu holen.

Das Endgerät kontaktiert erneut den Provisionierungsserver, vgl. Schritt 9 und sendet einen Provisionierungsrequest.

Der Provisionierungsserver generiert auf den Empfang des Provisionierungsrequest hin in Schritt 10 eine vollständige Konfiguration inklusive einem zusätzlichen Authentifikationsmerkmal (Authentifikationstoken) für eine weitere Provisionierung und übermittelt diese ans Endgerät. Das zusätzliche Authentifikationsmerkmal (Authentifikationstoken) wird in der Datenbank hinterlegt.

Der Status des TK-Endgerätes in der Datenbank wird in (4) geändert.

In Schritt 11 verarbeitet das Endgerät die vollständige Konfiguration und nimmt auf der Basis der endgültigen Konfiguration Kontakt zu den Kommunikationsdiensten bzw. dem Registrar auf.

Das TK-Endgerät ist nunmehr vollständig konfiguriert und operativ in die Cloud-PBX-Dienst eingebunden.

Wenn das TK-Endgerät zu einem späteren Zeitpunkt, also nach der vollständigen Konfiguration Kontakt zum Provisionierungsdienst aufnimmt, um eine aktuelle Konfiguration zu bekommen, übermittelt es jedoch auch das zusätzliche Authentifikationsmerkmal (Authentifikationstoken), welches in Schritt 10 generiert und ihm übermittelt wurde, vgl. Schritt 12.

Dies kann ausgelöst werden z.B.
- periodisch,
- aufgrund einer Aufforderung der Kommunikationsdienste,
- oder manuell vom Benutzer (z.B. durch Neustart des Endgerätes).

Daraufhin verifiziert in Schritt 13 der Provisionierungsdienst anhand der MAC, dass sich das TK-Endgerät in Status 4 befindet, und veranlasst die benötigte zusätzliche Authentifikation. Diese wird mit der übermittelten Authentifikation verifiziert. Nur wenn die Authentifikation übereinstimmt, wird eine (neue) Konfiguration generiert und an das TK-Endgerät übermittelt.

Vorzugsweise wird das Authentifikationstoken verändert bzw. neu generiert, dem TK-Endgerät übermittelt und in der Datenbank gespeichert.

Schritte 12 und 13 können sich beliebig häufig wiederholen.

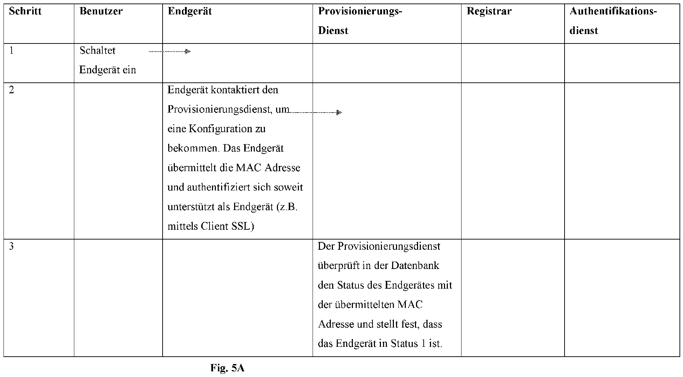

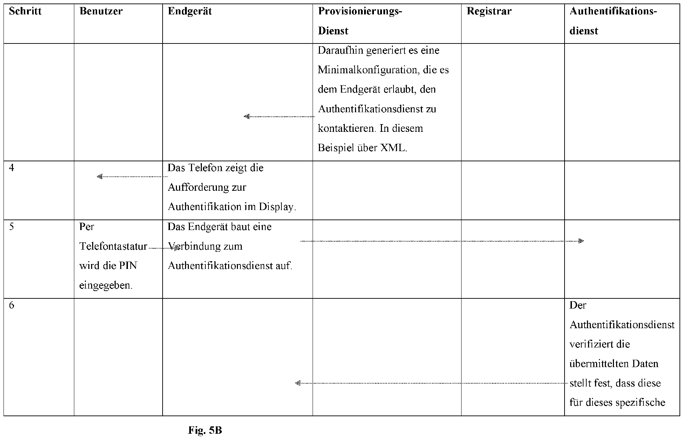

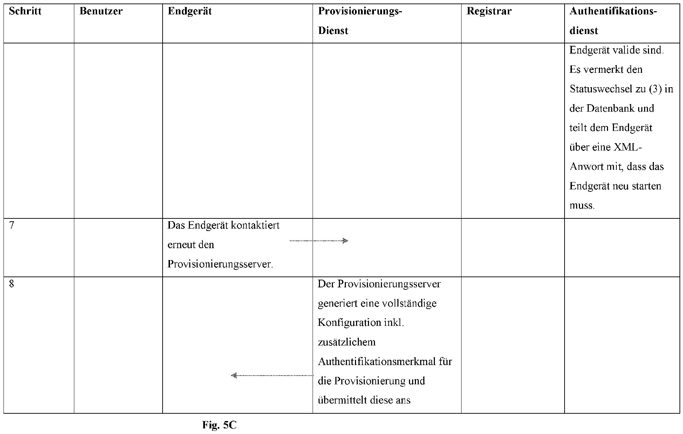

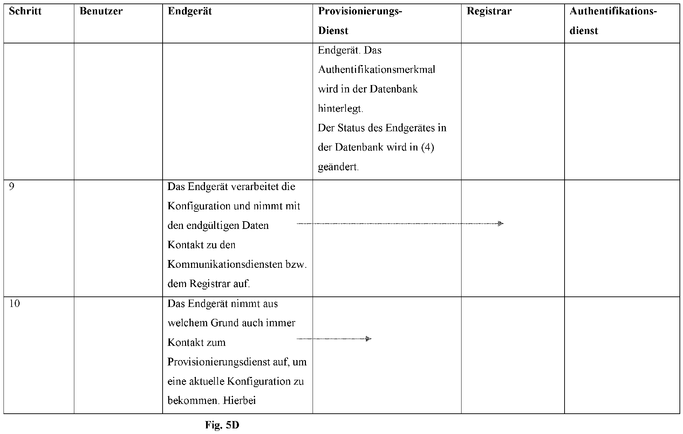

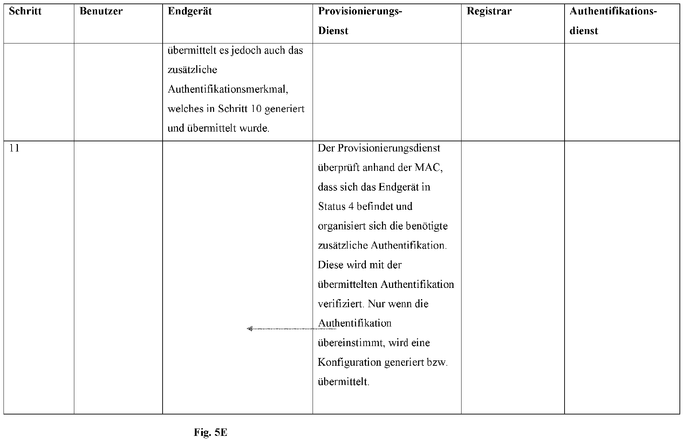

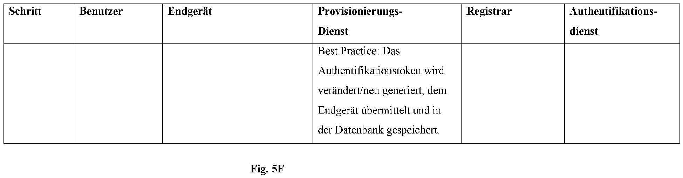

Fig. 5 A-F zeigt den Ablauf der Provisionierung gemäß einem zweiten Ausführungsbeispiel der Erfindung, nämlich Beispiel für Authentifizierung auf Basis von XML ohne SIP. Bei diesem Ausführungsbeispiel ist kein Registrar vonnöten.

Die Schritte 1 und 2 sind identisch wie zuvor.

In Schritt 3 wird die Minimalkonfiguration, die es dem Endgerät erlaubt, den Authentifikationsdienst zu kontaktieren, über XML an das TK-Endgerät übermittelt.

In Schritt 4 zeigt das TK-Endgerät die Aufforderung zur Authentifikation in seinem Display an.

In Schritt 5 gibt der Benutzer die PIN per Telefontastatur ein. Das TK-Endgerät baut eine Verbindung zum Authentifikationsdienst auf und übermittelt die PIN-Daten an den Authentifikationsdienst.

In Schritt 6 verifiziert der Authentifikationsdienst die übermittelten Daten und stellt fest, dass diese für dieses spezifische Endgerät valide sind. Ers vermerkt den Statuswechsel zu (3) in der Datenbank und teilt dem Endgerät über eine XML-Anwort mit, dass das Endgerät neu gestartet werden muss.

Nach Neustart in Schritt 7 kontaktiert das Endgerät den Provisionierungsserver erneut.

Auf Empfang des Provisionierungsrequest in Schritt 8 generiert der Provisionierungsserver eine vollständige Konfiguration inkl. zusätzlichem Authentifikationsmerkmal für die Provisionierung und übermittelt diese ans Endgerät. Das Authentifikationsmerkmal (Authentifikationstoken) wird in der Datenbank hinterlegt.

Die übrigen Schritte 9 bis 11 entsprechen denjenigen des zuvor beschriebenen Ablaufs.

Schritt 10 muss nicht unmittelbar auf Schritt 9 folgen. Dies kann ausgelöst werden
- Periodisch
- Aufgrund einer Aufforderung der Kommunikationsdienste
- Manuell ausgelöst (z.B. durch Neustart des Endgerätes)

Schritte 10 und 11 können sich beliebig häufig wiederholen.

## Patentansprüche

1. Computer-implementiertes Verfahren zum Provisionieren eines Telekommunikations-, TK-, Endgeräts über eine Cloud, wobei dem TK-Endgerät ein Identifier, eine ID, zugeordnet ist, die das TK-Endgerät identifiziert, und wobei das Provisionieren des TK-Endgeräts ein Bereitstellen einer Konfiguration für das TK-Endgerät über die Cloud zum Ziel hat, wobei die Konfiguration das TK-Endgerät zur Nutzung von vorbestimmten Cloud-basierten TK-Diensten befähigt, aufweisend die folgenden Schritte:
Empfangen, durch einen Provisionierungsdienst, einer Provisionierungsanfrage von dem TK-Endgerät, um eine Konfiguration zu erhalten, wobei die Provisionierungsanfrage die dem TK-Endgerät zugeordnete ID umfasst,
Identifizieren, durch den Provisionierungsdienst, des TK-Endgerätes auf der Basis der ID in einer Datenbank, welche eine vorbestimmte Anzahl von TK-Endgeräten, für jedes der TK-Endgeräte dessen zugeordnete ID und wobei jedem TK-Endgerät in der Datenbank ein Konfigurationszustand aus einer Anzahl von vorbestimmten Konfigurationszuständen zugeordnet ist, und
Verifizieren, durch den Provisionierungsdienst, mit Hilfe der Datenbank, dass der dem TK-Endgerät zugeordnete Zustand "nicht konfiguriert und nicht authentifiziert (1)" lautet, andernfalls Unterbrechen des Provisionierungsverfahrens,
Veranlassen, durch den Provisionierungsdienst, einer vorbestimmten Authentifizierungsprozedur für das TK-Endgerät, wobei die Authentifizierungsprozedur eine Authentifizierung des TK-Endgeräts anhand eines zur ID zusätzlichen dem TK-Endgerät zugeordneten gerätespezifischen Sicherheitsmerkmals umfasst,
Sofern die Authentifizierungsprozedur ein positives Ergebnis ergibt, Ausführen der Schritte A) bis D), andernfalls Ändern des in der Datenbank dem TK-Endgerät zugeordneten Zustands in einen Zustand "gesperrt" und Unterbrechen des Provisionierungsverfahrens ohne Bereitstellung einer Konfiguration.
A) Generieren, durch den Provisionierungsdienst, einer Ausprägung eines weiteren Authentifizierungsmerkmals für das TK-Endgerät, wobei die Ausprägung der zu generierenden Konfiguration hinzugefügt wird, wobei die Ausprägung für das TK-Endgerät in der Datenbank hinterlegt wird,
B) Generieren und Bereitstellen, durch den Provisionierungsdienst, der Konfiguration zur Übertragung an das TK-Endgerät,
C) nach Übertragung an das Endgerät, Ändern des in der Datenbank dem TK-Endgerät zugeordneten Zustands in "vollständig konfiguriert";
D) Warten, durch den Provisionierungsdienst, auf eine weitere Provisionierungsanfrage des TK-Endgeräts und bei Empfang einer weiteren Provisionierungsanfrage, Überprüfen des Zustands des TK-Endgeräts in der Datenbank anhand der zugordneten ID und, sofern der Zustand "authentifiziert und konfiguriert" ist, Anfordern des weiteren Authentifizierungsmerkmals für das TK-Endgerät, Überprüfen, auf Basis der Datenbank, ob die Ausprägung des weiteren Authentifizierungsmerkmals für das TK-Endgerät valide ist, und sofern die Überprüfung positiv ist, erneutes Veranlassen der Schritte B) und D), andernfalls Ändern des in der Datenbank dem TK-Endgerät zugeordneten Zustands in "gesperrt" und Unterbrechen des Provisionierungsverfahrens ohne Bereitstellung einer Konfiguration,
wobei vor dem erneuten Veranlassen der Schritte B) und D) der Schritt A) veranlasst wird.

2. Verfahren gemäß Anspruch 1, wobei das zusätzliche Sicherheitsmerkmal eine PIN ist, die einem Benutzer des TK-Endgeräts übermittelt wird, und wobei die Authentifizierungsprozedur die folgenden Schritte umfasst:
Generieren, durch den Provisionierungsdienst, einer provisorischen Konfiguration für das TK-Endgerät, die es dem TK-Endgerät nur erlaubt, einen vorbestimmten Authentifikationsdienst zum Zweck einer Authentifizierung des TK-Endgeräts zu kontaktieren,
Übermitteln, durch den Provisionierungsdienstes, der provisorischen Konfiguration an das TK-Endgerät,
auf einen Kommunikationsverbindungsaufbau durch das TK-Endgerät nach provisorischer Konfiguration mit dem Authentifikationsdienst,
Senden, über die Kommunikationsverbindung, durch den Authentifikationsdienst, einer Aufforderungsnachricht an das TK-Endgerät, die PIN an den Authentifikationsdienst zu senden,
Empfangen, durch den Authentifikationsdienst, der PIN, die von dem TK-Endgerät eingegeben werden und über die Kommunikationsverbindung übertragen werden,
Verifizieren, durch den Authentifikationsdienst, der PIN und,
sofern festgestellt wird, dass die PIN für das TK-Endgerät valide sind, Ändern des in der Datenbank dem TK-Endgerät zugeordneten Zustands in "vollständig authentifiziert und nicht konfiguriert " und
Senden einer Aufforderung an das TK-Endgerät, vorbestimmte Schritte zum Beziehen der Konfiguration auszuführen.

3. Verfahren gemäß Anspruch 2, wobei die PIN dem Benutzer über einen Kommunikationsweg zugestellt wird, der nicht diejenige Kommunikationsverbindung ist, über welche die PIN an den Authentifikationsdienst gesendet wird.

4. Verfahren gemäß Anspruch 2 oder 3, wobei der Kommunikationsweg eines von Briefpostweg, Kurznachrichtendienstweg, E-Mail-Dienst-Weg ist.

5. Verfahren gemäß einem der Ansprüche 2 bis 4, wobei die PIN via Audio DTMF oder http/XML kodiert über die Kommunikationsverbindung vom Authentifikationsdienst empfangen wird.

6. Verfahren gemäß Anspruch 1, wobei das zusätzliche Sicherheitsmerkmal eine Freigabe für ein TK-Endgerät ist, die einem TK-Endgerät anhand der ID assoziiert wird und dem Provisionierungsdienst bekannt gemacht wird, und wobei die Authentifizierungsprozedur eine Überprüfung der Freigabe für das TK-Endgerät anhand dessen zugewiesener ID umfasst und, sofern die Überprüfung positiv ist, Veranlassen, dass der in der Datenbank dem TK-Endgerät zugeordneten Zustand auf "Anlernen" gesetzt wird.

7. Verfahren gemäß Anspruch 1, wobei das zusätzliche Sicherheitsmerkmal zumindest eine vorbestimmte IP-Adresse ist, die dem Provisionierungsdienst bekannt gemacht wird, und wobei die Authentifizierungsprozedur die Überprüfung der IP-Adresse, unter welcher das TK-Endgerät die Provisionierungsanfrage sendet, auf Identität mit der dem Provisionierungsdienst zumindest einen bekannt gemachten Adresse umfasst

8. Verfahren gemäß dem vorherigen Anspruch, wobei die zumindest eine vorbestimmte IP-Adresse eine von dem Provisionierungsdienst empfangene IP-Adresse eines weiteren TK-Endgeräts ist, dem in der Datenbank der Zustand "vollständig konfiguriert" zugeordnet ist.

9. Verfahren gemäß einem der vorherigen Ansprüche, wobei die Überprüfung des zusätzlichen Sicherheitsmerkmals nur innerhalb einer vorbestimmten zeitlichen Befristung nach Bekanntgabe des Sicherheitsmerkmals an den Provisionierungsdienst ein positives Ergebnis liefern kann.

10. Verfahren gemäß einem der vorherigen Ansprüche, wobei in der Datenbank jedem Endgerät ein eindeutiges Zertifikat zugeordnet wird und wobei die erste Provisionierungsanfrage das Zertifikat des Endgerätes aufweist, und wobei das Zertifikat zusammen mit der MAC-Adresse verifiziert wird.

11. Verfahren gemäß einem der vorherigen Ansprüche, wobei nach Unterbrechung des Verfahrens der Provisionierungsdienst für ein vorbestimmtes Zeitintervall auf einen administrativen Eingriff wartet und, sofern der Eingriff erfolgt, die Unterbrechung aufgehoben wird, in der Datenbank der Zustand des TK-Endgeräts auf "authentifiziert und konfiguriert" gesetzt wird und das Provisionierungsverfahren an derjenigen Stelle fortgesetzt wird, an welcher die Unterbrechung stattfand.

12. Verfahren gemäß einem der vorherigen Ansprüche, wobei das TK-Endgerät ein Telefongerät ist.

13. Verfahren gemäß einem der vorherigen Ansprüche, wobei die ID die MAC-Adresse des TK-Endgeräts umfasst.

14. Verfahren gemäß einem der vorherigen Ansprüche, wobei die Provisionierungsanfrage zusätzlich ein Sicherheitszertifikat (SSL) aufweist, welches dem TK-Endgerät zugeordnet ist und wobei das Identifizieren des TK-Endgeräts um auf der Basis der zugeordneten ID umfasst, zu verifizieren, dass das Sicherheitszertifikat (SSL) für das TK-Endgerät valide ist.

15. Verfahren gemäß einem der vorherigen Ansprüche, wobei das Sicherheitsmerkmal und jede Ausprägung des weiteren Authentifizierungsmerkmals auf der Basis eines technischen Zufallsverfahrens generiert wird.

16. Verfahren gemäß einem der vorherigen Ansprüche, wobei der Authentifikationsdienst vom Provisionierungsdienst umfasst ist.

17. Verfahren gemäß einem der vorherigen Ansprüche, wobei das weitere Authentifizierungsmerkmal einen Hash-Wert umfasst, der zumindest aus einem zufallsgenerierten Wert gebildet wird.

## Claims

1. A computer-implemented method for provisioning a telecommunication-, TC-, terminal apparatus via a cloud, wherein the TC terminal apparatus is assigned an identifier, an ID, which identifies the TC terminal apparatus, and wherein the provisioning of the TC terminal apparatus has the goal of providing a configuration for the TC terminal apparatus via the cloud, wherein the configuration enables the TC terminal apparatus to use predetermined cloud-based TC services, having the following steps:
receiving, by a provisioning service, a provisioning request from the TC terminal apparatus to obtain a configuration, wherein the provisioning request comprises the ID assigned to the TC terminal apparatus,
identifying, by the provisioning service, the TC terminal apparatus on the basis of the ID in a database containing a predetermined number of TC terminal apparatus, for each of the TC terminal apparatus its assigned ID and wherein each TC terminal apparatus in the database is assigned a configuration state from a number of predetermined configuration states, and
verifying, by the provisioning service, with the help of the database that the state assigned to the TC terminal apparatus is "not configured and not authenticated (1)", otherwise interrupting the provisioning method,
initiating, by the provisioning service, a predetermined authentication procedure for the TC terminal apparatus, wherein the authentication procedure comprises authentication of the TC terminal apparatus on the basis of an apparatus-specific security feature assigned to the TC terminal apparatus in addition to the ID,
if the authentication procedure returns a positive result, carrying out steps A) to D), otherwise changing the state assigned to the TC terminal apparatus in the database to a "blocked" state and interrupting the provisioning method without providing a configuration.
A) generating, by the provisioning service, a characteristic of a further authentication feature for the TC terminal apparatus, wherein the characteristic is added to the configuration to be generated, wherein the characteristic for the TC terminal apparatus is stored in the database,
B) generating and providing, through the provisioning service, the configuration for transmission to the terminal apparatus,
C) after transmitting to the terminal apparatus, changing the state assigned to the TC terminal apparatus in the database to "fully configured";
D) waiting, by the provisioning service, for a further provisioning request from the TC terminal apparatus and, on receipt of a further provisioning request, checking the state of the TC terminal apparatus in the database on the basis of the assigned ID and, if the state is "authenticated and configured", requesting the further authentication feature for the TC terminal apparatus, checking on the basis of the database whether the characteristic of the further authentication feature for the TC terminal apparatus is valid, and if the check is positive, initiating steps B) and D) again, otherwise changing the state assigned to the TC terminal apparatus in the database to "blocked" and interrupting the provisioning method without providing a configuration,
wherein step A) is initiated before steps B) and D) are initiated again.

2. The method according to claim 1, wherein the additional security feature is a PIN transmitted to a user of the TC terminal apparatus, and wherein the authentication procedure comprises the following steps:
generating, by the provisioning service, a provisional configuration for the TC terminal apparatus that only allows the TC terminal apparatus to contact a predetermined authentication service for the purpose of authenticating the TC terminal apparatus,
transmitting the provisional configuration to the terminal apparatus via the provisioning service,
to a communication connection establishment by the TC terminal apparatus after provisional configuration with the authentication service,
sending, via the communication connection, by the authentication service, a request message to the TC terminal apparatus to send the PIN to the authentication service,
receiving, through the authentication service, the PIN entered by the TC terminal apparatus and transmitted via the communication connection,
verifying, through the authentication service, the PIN and,
if it is determined that the PINs for the TC terminal apparatus are valid, changing the state assigned to the TC terminal apparatus in the database to "fully authenticated and not configured" and
sending a request to the terminal apparatus to carry out predetermined steps to obtain the configuration.

3. The method according to claim 2, wherein the PIN is delivered to the user via a communication path other than the communication connection via which the PIN is sent to the authentication service.

4. The method according to claim 2 or 3, wherein the communication path is one of letter post path, short message service path, e-mail service path.

5. The method according to any of claims 2 to 4, wherein the PIN is received via audio DTMF or http/XML encoded over the communication connection from the authentication service.

6. The method according to claim 1, wherein the additional security feature is a release for a TC terminal apparatus which is associated with a TC terminal apparatus on the basis of the ID and is made known to the provisioning service, and wherein the authentication procedure comprises checking the release for the TC terminal apparatus on the basis of its assigned ID and, if the check is positive, causing the state assigned to the TC terminal apparatus in the database to be set to "teach-in".

7. The method according to claim 1, wherein the additional security feature is at least one predetermined IP address made known to the provisioning service, and wherein the authentication procedure comprises checking the IP address at which the TC terminal apparatus sends the provisioning request for identity with the at least one address made known to the provisioning service.

8. The method according to the preceding claim, wherein the at least one predetermined IP address is an IP address, received from the provisioning service, of another TC terminal apparatus to which the state "fully configured" is assigned in the database.

9. The method according to any of the preceding claims, wherein the verification of the additional security feature can only provide a positive result within a predetermined time limit after the security feature is disclosed to the provisioning service.

10. The method according to any of the preceding claims, wherein a unique certificate is assigned to each terminal apparatus in the database and wherein the first provisioning request has the certificate of the terminal apparatus, and wherein the certificate is verified together with the MAC address.

11. The method according to any of the preceding claims, wherein after interruption of the method, the provisioning service waits for an administrative intervention for a predetermined time interval and, if the intervention occurs, the interruption is canceled, the state of the TC terminal apparatus is set to "authenticated and configured" in the database and the provisioning method is continued at the position at which the interruption occurred.

12. The method according to any of the preceding claims, wherein the telecommunication terminal apparatus is a telephone apparatus.

13. The method according to any of the preceding claims, wherein the ID comprises the MAC address of the TC terminal apparatus.

14. The method according to any of the preceding claims, wherein the provisioning request additionally has a security certificate (SSL) associated with the TC terminal apparatus, and wherein identifying the TC terminal apparatus comprises verifying, based on the associated ID, that the security certificate (SSL) is valid for the TC terminal apparatus.

15. The method according to any of the preceding claims, wherein the security feature and each expression of the further authentication feature is generated on the basis of a technical randomization method.

16. The method according to any of the preceding claims, wherein the authentication service is comprised by the provisioning service.

17. The method according to any of the preceding claims, wherein the further authentication feature comprises a hash value formed from at least one randomly generated value.

## Revendications

1. Procédé mis en oeuvre par ordinateur pour le provisionnement d'un terminal de télécommunication, TK, par l'intermédiaire d'un nuage, dans lequel le terminal TK est associé à un identifiant, un ID, qui identifie le terminal TK, et dans lequel le provisionnement du terminal TK a pour but de fournir une configuration pour le terminal TK par l'intermédiaire du nuage, dans lequel la configuration permet au terminal TK d'utiliser des services TK prédéterminés basés sur le nuage, présentant les étapes suivantes :
réception, par un service de provisionnement, d'une demande de provisionnement en provenance du terminal TK afin d'obtenir une configuration, dans lequel la demande de provisionnement comprend l'ID associé au terminal TK,
identification, par le service de provisionnement, du terminal TK sur la base de l'ID dans une base de données qui un nombre prédéterminé de terminaux TK, pour chacun des terminaux TK son ID associé, et dans lequel un état de configuration parmi un certain nombre d'états de configuration prédéterminés est associé à chaque terminal TK dans la base de données, et
vérification, par le service de provisionnement, à l'aide de la base de données, du fait de savoir si l'état associé au terminal TK est « non configuré et non authentifié (1) », sinon interruption du procédé de provisionnement,
initiation, par le service de provisionnement, d'une procédure d'authentification prédéterminée pour le terminal TK, dans lequel la procédure d'authentification comprend une authentification du terminal TK à l'aide d'une caractéristique de sécurité spécifique à l'appareil associée au terminal TK en plus de l'ID,
si la procédure d'authentification donne un résultat positif, exécution des étapes A) à D), sinon modification de l'état associé au terminal TK dans la base de données en un état « bloqué » et interruption du procédé de provisionnement sans fourniture d'une configuration.
A) génération, par le service de provisionnement, d'une expression d'une autre caractéristique d'authentification pour le terminal TK, dans lequel l'expression est ajoutée à la configuration à générer, dans lequel l'expression pour le terminal TK est enregistrée dans la base de données,
B) génération et fourniture, par le service de provisionnement, de la configuration à transmettre au terminal TK,
C) après transmission au terminal, changement de l'état associé au terminal TK dans la base de données en « entièrement configuré » ;
D) attente, par le service de provisionnement, d'une autre demande de provisionnement du terminal TK et, à la réception d'une autre demande de provisionnement, vérification de l'état du terminal TK dans la base de données à l'aide de l'ID associé et, si l'état est « authentifié et configuré », demande de l'autre caractéristique d'authentification pour le terminal TK, vérification, sur la base de la base de données, du fait de savoir si l'expression de l'autre caractéristique d'authentification est valide pour le terminal TK et, si la vérification est positive, initiation à nouveau des étapes B) et D), sinon modification de l'état associé au terminal TK dans la base de données en « bloqué » et interruption du procédé de provisionnement sans fourniture d'une configuration,
dans lequel l'étape A) est initiée avant l'initiation à nouveau des étapes B) et D).

2. Procédé selon la revendication 1, dans lequel la caractéristique de sécurité supplémentaire est un NIP qui est transmis à un utilisateur du terminal TK, et dans lequel la procédure d'authentification comprend les étapes suivantes :
génération, par le service de provisionnement, d'une configuration provisoire pour le terminal TK, laquelle configuration provisoire permet au terminal TK uniquement de contacter un service d'authentification prédéterminé dans le but d'authentifier le terminal TK,
transmission, par le service de provisionnement, de la configuration provisoire au terminal TK,
sur un établissement de liaison de communication par le terminal TK après une configuration provisoire avec le service d'authentification,
envoi, par l'intermédiaire de la liaison de communication, par le service d'authentification, d'un message incitant le terminal TK à envoyer le NIP au service d'authentification,
réception, par le service d'authentification, des NIP saisis par le terminal TK et transmis par l'intermédiaire de la liaison de communication,
vérification, par le service d'authentification, des NIP et,
s'il est établi que les NIP sont valides pour le terminal TK, modification de l'état associé au terminal TK dans la base de données en « complètement authentifié et non configuré », et
envoi au terminal TK d'une incitation à exécuter des étapes prédéterminées pour obtenir la configuration.

3. Procédé selon la revendication 2, dans lequel le NIP est délivré à l'utilisateur par l'intermédiaire d'une voie de communication autre que la liaison de communication par l'intermédiaire de laquelle le NIP est envoyé au service d'authentification.

4. Procédé selon la revendication 2 ou 3, dans lequel la voie de communication est l'une parmi la voie postale, la voie de service de messages courts, la voie de service de courrier électronique.

5. Procédé selon l'une des revendications 2 à 4, dans lequel le NIP est reçu par Audio DTMF ou http/XML de manière codée par l'intermédiaire de la liaison de communication depuis le service d'authentification.

6. Procédé selon la revendication 1, dans lequel la caractéristique de sécurité supplémentaire est une validation pour un terminal TK qui est associée à un terminal TK sur la base de l'ID et est portée à la connaissance du service de provisionnement, et dans lequel la procédure d'authentification comprend une vérification de la validation pour le terminal TK sur la base de son ID attribué et, si la vérification est positive, l'initiation selon laquelle l'état associé au terminal TK dans la base de données est réglé sur « apprentissage ».

7. Procédé selon la revendication 1, dans lequel la caractéristique de sécurité supplémentaire est au moins une adresse IP prédéterminée portée à la connaissance du service de provisionnement, et dans lequel la procédure d'authentification comprend la vérification de l'identité de l'adresse IP, sous laquelle le terminal TK envoie la demande de provisionnement, avec l'au moins une adresse portée à la connaissance du service de provisionnement.

8. Procédé selon la revendication précédente, dans lequel l'au moins une adresse IP prédéterminée est une adresse IP, reçue en provenance du service de provisionnement, d'un autre terminal TK auquel l'état « entièrement configuré » est associé dans la base de données.

9. Procédé selon l'une des revendications précédentes, dans lequel la vérification de la caractéristique de sécurité supplémentaire ne peut fournir un résultat positif que dans une limite de temps prédéterminée après la communication de la caractéristique de sécurité au service de provisionnement.

10. Procédé selon l'une des revendications précédentes, dans lequel un certificat unique est associé à chaque terminal dans la base de données et dans lequel la première demande de provisionnement présente le certificat du terminal, et dans lequel le certificat est vérifié conjointement avec l'adresse MAC.

11. Procédé selon l'une des revendications précédentes, dans lequel, après l'interruption du procédé, le service de provisionnement attend une intervention administrative pendant un intervalle de temps prédéterminé et, si l'intervention est effectuée, l'interruption est annulée, l'état du terminal TK est réglé sur « authentifié et configuré » dans la base de données et le procédé de provisionnement est poursuivi à l'endroit où l'interruption a eu lieu.

12. Procédé selon l'une des revendications précédentes, dans lequel le terminal TK est un appareil téléphonique.

13. Procédé selon l'une des revendications précédentes, dans lequel l'ID comprend l'adresse MAC du terminal TK.

14. Procédé selon l'une des revendications précédentes, dans lequel la demande de provisionnement présente en outre un certificat de sécurité (SSL) qui est associé au terminal TK, et dans lequel l'identification du terminal TK comprend la vérification, sur la base de l'ID associé, du fait de savoir si le certificat de sécurité (SSL) est valide pour le terminal TK.

15. Procédé selon l'une des revendications précédentes, dans lequel la caractéristique de sécurité et chaque expression de l'autre caractéristique d'authentification sont générées sur la base d'un procédé technique aléatoire.

16. Procédé selon l'une des revendications précédentes, dans lequel le service d'authentification est compris dans le service de provisionnement.

17. Procédé selon l'une des revendications précédentes, dans lequel l'autre caractéristique d'authentification comprend une valeur de hachage qui est formée au moins à partir d'une valeur générée de manière aléatoire.
